# EUROPEAN PATENT APPLICATION

(11) **EP 4 451 787 A1**
(43) Date of publication of application: **23.10.2024**
(21) Application number: 22906236.9
(22) Date of filing: 28.11.2022
(51) Int. Cl.: H04W 76/14, H04L 5/00

(54) **SIDELINK COMMUNICATION METHOD, AND COMMUNICATION NODE AND STORAGE MEDIUM**

(30) Priority: 16.12.2021 CN 202111547177
(71) Applicant: ZTE Corporation, Shenzhen Guangdong 518057 (CN)
(72) Inventor: XING, Weimin, Shenzhen, Guangdong 518057 (CN); CHEN, Jie, Shenzhen, Guangdong 518057 (CN); LU, Youxiong, Shenzhen, Guangdong 518057 (CN)
(74) Representative: Iannone, Carlo Luigi
(86) International application number: PCT/CN2022/134578
(87) International publication number: WO 2023/109485

(57) **Abstract**

Provided are a sidelink (SL) communication method, a communication node and a storage medium. According to the sidelink communication method, an SL transmission is sent, where the SL transmission corresponds to a candidate feedback occasion set; first feedback information is received at the candidate feedback occasion set; and second feedback information is reported to a higher layer according to the first feedback information.

## Description

### TECHNICAL FIELD

The present application relates to the field of wireless communication network technology, for example, a sidelink communication method, a communication node and a storage medium.

### BACKGROUND

Direct communication may also be referred to as sidelink (SL) communication. SL communication operates on licensed bands or dedicated bands. With the development of SL communication, the demand for SL sending on conventional unlicensed bands is becoming increasingly strong. Before sending of SL on unlicensed bands, a channel access procedure, commonly known as a Listen Before Talk (LBT) procedure, needs to be performed according to relevant band usage specifications. If the channel resource is determined to be idle (LBT success) within the sensing duration corresponding to the LBT procedure, a sending terminal can continue to send SL; otherwise, the sending terminal needs to abandon the transmission of SL. The sending terminal may send an SL transmission, and the SL transmission may correspond to a feedback signal or feedback information. A receiving terminal may send the preceding feedback information, so the sending terminal acquires the result of the SL transmission sent by the sending terminal by receiving the feedback information. If LBT failure occurs at the receiving terminal, or the receiving terminal cannot send the feedback information normally due to power limitations or prioritization reasons, the sending terminal may perform incorrect operations without acquiring the feedback information, such as making an error in determining whether to retransmit the SL transmission, which affects the network efficiency and reliability.

### SUMMARY

The present application provides a sidelink (SL) communication method, a communication node and a storage medium.

Embodiments of the present application provide a sidelink communication method. The method includes the following.

An SL transmission is sent, where the SL transmission corresponds to a candidate feedback occasion set; first feedback information is received at the candidate feedback occasion set; and second feedback information is reported to a higher layer according to the first feedback information.

The embodiments of the present application further provide a sidelink communication method. The method includes the following.

An SL transmission is received, where the SL transmission corresponds to a candidate feedback occasion set; first feedback information is determined; and a decision procedure is executed before at least one candidate feedback occasion in the candidate feedback occasion set, and the first feedback information is sent at at least one candidate feedback occasion of candidate feedback occasions at which decision results are determined as success.

The embodiments of the present application further provide a sidelink communication method. The method includes the following.

Second feedback information is received; and an operation of an SL transmission is executed according to the second feedback information.

The embodiments of the present application further provide a sidelink communication method. The method includes the following.

A group of SL transmissions are sent, where each SL transmission in the group of SL transmissions corresponds to a respective candidate feedback occasion set; first feedback information is received at candidate feedback occasion sets corresponding to the group of SL transmissions; and third feedback information to be reported to a network device is determined according to the first feedback information.

The embodiments of the present application further provide a communication node. The communication node includes a memory, a processor and a computer program stored in the memory and executable by the processor, where the processor, when executing the program, performs the preceding sidelink communication methods.

The embodiments of the present application further provide a computer-readable storage medium for storing a computer program which, when executed by a processor, causes the processor to perform the preceding sidelink communication methods.

### BRIEF DESCRIPTION OF DRAWINGS

FIG. 1 is a diagram of a LBT procedure according to an embodiment;
FIG. 2 is a flowchart of a sidelink communication method according to an embodiment;
FIG. 3 is a flowchart of another sidelink communication method according to an embodiment;
FIG. 4 is a flowchart of another sidelink communication method according to an embodiment;
FIG. 5 is a flowchart of another sidelink communication method according to an embodiment;
FIG. 6 is a structural diagram of a sidelink communication apparatus according to an embodiment;
FIG. 7 is a structural diagram of a sidelink communication apparatus according to an embodiment;
FIG. 8 is a structural diagram of a sidelink communication apparatus according to an embodiment;
FIG. 9 is a structural diagram of a sidelink communication apparatus according to an embodiment; and
FIG. 10 is a structural diagram of hardware of a communication node according to an embodiment.

### DETAILED DESCRIPTION

The present application is described hereinafter in conjunction with the drawings and embodiments. The embodiments described herein are intended to explain the present application. For ease of description, the drawings illustrate only part related to the present application.

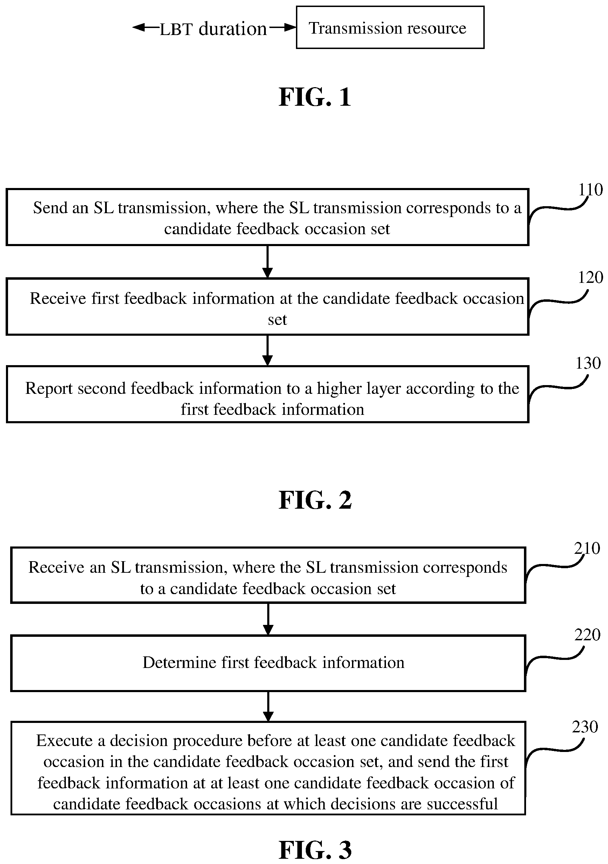

A general Listen Before Talk procedure (also known as a channel access procedure) occurs before a communication node (for example, the communication node may be a base station or a terminal) performs transmission, and a transmission resource may be a grant resource. The length of the LBT procedure in terms of time span may be referred to as the LBT duration (the LBT duration may include one or more sensing slots). FIG. 1 is a diagram of an LBT procedure according to an embodiment. As shown in FIG. 1, when a channel within the LBT duration is determined as an idle channel, the communication node can perform sending.

Referring to 3GPP TS 387.213, there are two types of LBT according to whether the LBT duration is random or deterministic.

For LBT type 1 (that is, a first type channel access procedure), the LBT duration may be a random value, and LBT type 1 may include multiple Channel Access Priority Classes (CAPCs). For LBT type 2 (that is, a second type channel access procedure), the LBT duration may be a determined value, and according to different values of the LBT duration, LBT type 2 may be divided into multiple subtypes such as LBT type 2A, LBT type 2B and LBT type 2C.

Broadly speaking, each CAPC in LBT type 1 or each subtype in LBT type 2 may also be referred to as a channel access type.

In the SL communication system, when there is a need to transmit traffic between communication nodes, the traffic data between communication nodes is not forwarded through other network devices, but is directly transmitted from a data source communication node to a target communication node, that is, the traffic data is transmitted through direct communication between communication nodes. The SL communication may include multiple cast types.

The SL communication includes unitcast. For the unicast, only a specific communication node is a receiving terminal, and the receiving terminal provides feedback on the received data. The feedback here may be acknowledgement (ACK) information feedback or negative ACK (NACK) information feedback. That is, when the received data is correct, the receiving terminal feeds back ACK information; when the received data is incorrect, the receiving terminal feeds back NACK information.

The SL communication includes groupcast. For the groupcast, only a specific group of communication nodes are receiving terminals, and the receiving terminals provide feedback on the received data. For groupcast type 1: the feedback here is NACK only information feedback. That is, when a receiving terminal performs a correct receiving operation, the receiving terminal does not provide feedback; and when the receiving terminal performs an incorrect receiving operation, the receiving terminal feeds back NACK information. For groupcast type 2, the feedback here may be ACK information feedback or NACK information feedback. That is, when a receiving terminal performs a correct receiving operation, the receiving terminal feeds back ACK information; when the receiving terminal performs an incorrect receiving operation, the receiving terminal feeds back NACK information.

The SL communication includes broadcast. For the broadcast, all surrounding user equipments (UEs) may be receiving terminals, and the receiving terminals will not provide feedback on the received data, that is, there is no ACK information feedback or NACK information feedback. In addition, the groupcast and the unicast may also disable feedback. That is, the receiving terminal of the groupcast and the receiving terminal of the unicast do not provide feedback.

In an embodiment, the sending terminal sends an SL transmission. If the SL transmission enables feedback, the SL transmission corresponds to a feedback occasion in the time domain. A time domain feedback occasion may include one or more feedback resources according to the cast type such as the groupcast or the unicast. The sending terminal detects feedback information (that is, ACK feedback information or NACK feedback information) sent by one or more receiving terminals at this time domain feedback occasion, and then determines whether the feedback information of the SL transmission is ACK or NACK.

In an embodiment, when the sending terminal sends a data packet or a transmission block (TB), the sending terminal may need to perform more than one SL transmission on the transmission block to ensure that the expected receiving terminal can correctly receive the data packet or the transmission block. These SL transmissions may be referred to as a group of SL transmissions.

For one SL transmission in the group of SL transmissions, whether the current SL transmission is correct may be determined according to the received feedback information, which is used for determining whether to continue a next SL transmission. For scenarios where a single SL transmission can correspond to multiple candidate feedback occasions in the time domain, for example, if a sending terminal sends an SL transmission in slot n, then correspondingly, the sending terminal can receive feedback information in slots n+T1, n+T2, ..., n+TN. For the receiving terminal, the LBT procedure may be performed in multiple candidate feedback slots n+T1, n+T2, ..., n+TN in an attempt to send feedback information, so the probability of sending feedback information is greatly improved. However, this manner of one SL transmission corresponding to multiple candidate feedback occasions requires the sending terminal to adjust the feedback information receiving strategy to prevent the sending terminal from making incorrect operations that affect the network efficiency when the sending terminal does not acquire feedback information at a feedback occasion.

FIG. 2 is a flowchart of a sidelink communication method according to an embodiment. As shown in FIG. 2, the method provided in this embodiment includes 110, 120 and 130. The method may be applied to a sending terminal.

In 110, an SL transmission is sent, where the SL transmission corresponds to a candidate feedback occasion set.

In 120, first feedback information is received at the candidate feedback occasion set.

In 130, second feedback information is reported to a higher layer according to the first feedback information.

In the embodiment, the candidate feedback occasion set may refer to a set composed of multiple candidate feedback occasions in the time domain. The sending terminal sends the SL transmission, where an SL transmission may correspond to a candidate feedback occasion set. The sending terminal may receive the first feedback information sent by a corresponding receiving terminal at the candidate feedback occasion set. On this basis, the sending terminal may report the second feedback information to the higher layer of the sending terminal.

In this embodiment, the sending terminal receives the first feedback information returned by the corresponding receiving terminal at the candidate feedback occasion set. On this basis, the sending terminal reports the second feedback information to the higher layer according to the received first feedback information, so it can be effectively prevented that the sending terminal makes incorrect operations without acquiring the first feedback information, and thus the efficiency and reliability of network communication can be improved.

In an embodiment, the SL transmission is a unicast transmission that enables feedback, and the first feedback information includes NACK information or ACK information.

In an embodiment, in response to receiving the first feedback information at any candidate feedback occasion or at least one candidate feedback occasion in the candidate feedback occasion set, the second feedback information is set to be the same as the received first feedback information.

In an embodiment, in response to not receiving the first feedback information at the candidate feedback occasion set, the second feedback information is set as NACK information, or the second feedback information is set as not receiving the first feedback information.

In an embodiment, the SL transmission is a first groupcast type transmission that enables feedback, and the first feedback information includes NACK information.

In an embodiment, in response to receiving the first feedback information at any candidate feedback occasion or at least one candidate feedback occasion in the candidate feedback occasion set, the second feedback information is set as NACK information.

In an embodiment, in response to not receiving the first feedback information at the candidate feedback occasion set, the second feedback information is set as ACK information, or the second feedback information is set as not receiving the first feedback information.

In an embodiment, in response to a transmission block carried by the SL transmission belongs to a first transmission, or a transmission block carried by the SL transmission belongs to an n-th transmission, where n is less than or equal to N, the second feedback information is set as NACK information, where N is a positive integer. N may be a value predefined by the system or a value configured or preconfigured by the network.

In an embodiment, the SL transmission is a second groupcast type transmission that enables feedback, and first feedback information of each member includes NACK information or ACK information.

In an embodiment, in response to first feedback information of a member UE received at at least one candidate feedback occasion is ACK information, it is determined that the first feedback information of the member UE is ACK information; otherwise, it is determined that the first feedback information of the member UE is NACK information.

In an embodiment, the at least one feedback occasion belongs to the candidate feedback occasion set corresponding to the SL transmission; or the at least one feedback occasion belongs to candidate feedback occasion sets corresponding to a group of SL transmissions where the SL transmission is located.

In an embodiment, in the case where first feedback information of each member in a member group is received as ACK information, the second feedback information is set as ACK information; otherwise, the second feedback information is set as NACK information.

In an embodiment, the SL transmission is a third groupcast type transmission that enables feedback, and first feedback information of each member includes NACK information or ACK information.

In an embodiment, in response to receiving the first feedback information at any candidate feedback occasion or at least one candidate feedback occasion in the candidate feedback occasion set and the first feedback information includes the NACK information, the second feedback information is set as NACK information.

In an embodiment, in response to the first feedback information received at the candidate feedback occasion set only includes the ACK information, the second feedback information is set as ACK information; otherwise, the second feedback information is set as NACK information.

In an embodiment, in response to not receiving the first feedback information at the candidate feedback occasion set, the second feedback information is set as NACK information, or the second feedback information is set as not receiving the first feedback information.

In an embodiment, the SL transmission belongs to a group of SL transmissions; data blocks of the group of SL transmissions are the same, or the group of SL transmissions belong to an SL process, or the group of SL transmissions include at least one SL transmission indicated by a network or the higher layer, or the group of SL transmissions include a transmission, indicated by a network or the higher layer, corresponding to at least one grant resource.

The sidelink communication method is exemplarily described below through different embodiments.

### Embodiment 1

In an embodiment, the SL transmission and the feedback information corresponding to the SL transmission belong to the same resource pool. The network or the base station may configure or preconfigure one or more resource pools for sending or reception of SL signals. For the convenience of subsequent description in the present application, the configuration refers to the configuration or the pre-configuration.

In an embodiment, a sending resource pool of SL communication is configured. The sending resource pool may include one or more SL feedback channel resource configurations, and one of the following may be included.

The one or more SL feedback channel resource configurations are used for receiving feedback information corresponding to the SL communication; the one or more SL feedback channel resource configurations are used for receiving or sending feedback information corresponding to the SL communication. For one SL feedback channel resource configuration, it may be indicated whether the SL feedback channel resource configuration is used for sending or receiving feedback information corresponding to the SL communication.

In an embodiment, a receiving resource pool of SL communication is configured. The receiving resource pool may include one or more SL feedback channel resource configurations, one of the following may be included.

The one or more SL feedback channel resource configurations are used for sending feedback information corresponding to the SL communication; the one or more SL feedback channel resource configurations are used for receiving or sending feedback information corresponding to the SL communication. For one SL feedback channel resource configuration, it may be indicated whether the SL feedback channel resource configuration is used for sending or receiving feedback information corresponding to the SL communication.

One SL feedback channel resource configuration may further include at least one of the following: a minimum interval K between the SL communication and a corresponding SL feedback channel resource, a period N of the SL feedback channel resource, the positions and the number of frequency domain resources of the SL feedback channel resource, the format of feedback information on the SL feedback channel resource or a code domain resource (such as cyclic shift information of a sequence) corresponding to feedback information on the SL feedback channel resource. The unit of K value may be a slot or a symbol. When the unit of K value is the slot, the slot may be a logical slot in the resource pool or a physical slot. In an embodiment, when K is greater than 0, it may be represented that the SL feedback channel resource is located before the SL communication corresponding to the SL feedback channel resource; when K is less than 0, it may be represented that the SL feedback channel resource is located behind the SL communication corresponding to the SL feedback channel resource. Alternatively, in an embodiment, when K is greater than 0, it may be represented that the SL feedback channel resource is located behind the SL communication corresponding to the SL feedback channel resource; when K is less than 0, it may be represented that the SL feedback channel resource is located before the SL communication corresponding to the SL feedback channel resource. Different SL feedback channel resource configurations may correspond to different K values. In an embodiment, the K value may be set to 0, representing that feedback information is disabled, or that the SL feedback channel resource and the SL communication corresponding to the SL feedback channel resource are in the same slot.

In an embodiment, the feedback information is the first feedback information, and may be hybrid automatic repeat request (HARQ) acknowledgement information, channel state report information, resource conflict indication information, or a reference signal (such as a channel state information reference signal (CSI-RS) or a positioning reference signal (PRS)).

In an embodiment, the sending terminal receives the first feedback information and reports the second feedback information to the higher layer.

The sending terminal needs to send an SL transmission on an unlicensed carrier. Generally, if the SL transmission enables feedback information, the destination receiving terminal receiving the SL transmission needs to send the first feedback information to the sending terminal. To ensure that the destination receiving terminal can send the first feedback information, multiple candidate feedback occasions in the time domain may be set. The destination receiving terminal can perform the LBT procedure at each candidate feedback occasion, so the probability of the receiving terminal sending the first feedback information can be greatly improved. The sending terminal also needs to receive the first feedback information at multiple candidate feedback occasions in the time domain corresponding to an SL transmission, and reports the second feedback information to the higher layer of the sending terminal according to the first feedback information, allowing the higher layer to perform the corresponding retransmission and other operations.

### Embodiment 2

In an embodiment, the SL transmission is a unicast transmission that enables feedback. The first feedback information may include NACK information or ACK information. Since there is only one destination receiving terminal, the sending terminal can determine the second feedback information to be reported to the higher layer only according to the first feedback information of this destination receiving terminal. That is, if the sending terminal receives the first feedback information at any candidate feedback occasion or at least one candidate feedback occasion of multiple candidate feedback occasions (the multiple candidate feedback occasions refer to the candidate feedback occasion set), the second feedback information is set to the same value as the received first feedback information; similarly, if the sending terminal receives the first feedback information at multiple candidate feedback occasions, the sending terminal can expect the received first feedback information to have the same value. Correspondingly, for the receiving terminal, if the receiving terminal sends the first feedback information at multiple candidate feedback occasions in the time domain, these pieces of first feedback information may have the same value.

In an embodiment, the SL transmission being a unicast transmission that enables feedback may include that a cast type in sidelink control information (SCI) corresponding to the SL transmission is indicated as unicast.

In an embodiment, the sending terminal may not receive the first feedback information at multiple candidate feedback occasions. In this case, one of scenarios described below may be included. The receiving terminal does not detect the SL transmission, that is, the receiving terminal does not trigger the feedback flow; the receiving terminal detects the SL transmission but does not receive the SL transmission correctly, the receiving terminal needs to feed back NACK information, but due to the LBT failure, the receiving terminal does not send the first feedback information; the receiving terminal detects and correctly receives the SL transmission, the receiving terminal needs to feed back ACK information, but due to the LBT failure, the receiving terminal does not send the first feedback information.

If the sending terminal does not receive the first feedback information at multiple candidate feedback occasions, one of the operations described below may be included.

The second feedback information may be set as NACK information; the second feedback information may be set as not receiving the first feedback information.

In an embodiment, if the higher layer of the sending terminal receives second feedback information corresponding to an SL transmission, the operation of the SL transmission may be executed according to the second feedback information, where the SL transmission may be a unicast transmission that enables feedback. On this basis, executing the operation of the SL transmission according to the second feedback information may include at least one of the operations described below.

If the second feedback information is ACK information, a retransmission cache in the process corresponding to the SL transmission may be cleared; if the second feedback information is NACK information, the process corresponding to the SL transmission may be triggered to retransmit the SL transmission (that is, the sending terminal resends the SL transmission); if the second feedback information is not receiving the first feedback information, processing may be performed according to NACK information, and the process corresponding to the SL transmission is triggered to retransmit the SL transmission, or the process corresponding to the SL transmission is triggered to re-request the receiving terminal to send the first feedback information (that is, the sending terminal re-receives the first feedback information at the candidate feedback occasion set corresponding to the SL transmission).

### Embodiment 3

In an embodiment, the SL transmission sent by the sending terminal is a groupcast type 1 (that is, the first groupcast type) transmission that enables feedback, where the first feedback information may include NACK information. Destination receiving terminals may be a group of UEs (that is, a group of UEs composed of multiple UEs serve as destination receiving terminals, and the multiple UEs may be understood as every group members of the destination receiving terminals; a UE may refer to a receiving terminal). For each receiving terminal (that is, each UE) in the group, if receiving operation is correct, no feedback is provided, that is, the receiving terminal does not send the first feedback information; if the SL transmission is detected but not received correctly, the receiving terminal sends the first feedback information as NACK information. For groupcast type 1, all feedback resources corresponding to the receiving terminals may be the same resource, that is, members within the group of the destination receiving terminals are not distinguished. Each member in the group may not have a separate identifier (that is, a Member ID), or all members in the group have the same Member ID, such as 0 or other values.

As long as the sending terminal detects NACK information feedback (that is, the first feedback information is NACK information), the sending terminal can determine that the second feedback information to be reported to the higher layer is NACK information. That is, if the sending terminal receives the first feedback information at any candidate feedback occasion or at least one candidate feedback occasion of multiple candidate feedback occasions, the second feedback information can be set as NACK information.

If the sending terminal does not receive the first feedback information at multiple candidate feedback occasions, the second feedback information may be set as ACK information, or the second feedback information is set as not receiving the first feedback information.

In an embodiment, the sending terminal may not receive the first feedback information at multiple candidate feedback occasions, possibly since the receiving terminal does not detect the SL transmission, that is, the receiving terminal does not trigger the feedback flow. To improve the reliability of the SL transmission, the sending terminal can perform multiple blind retransmissions.

In an embodiment, if a transmission block carried by the SL transmission is a first transmission, or a transmission block carried by the SL transmission is an n-th transmission, where n is less than or equal to N, the second feedback information may be set as NACK information, where N may be predefined by the system or may be configured or preconfigured by the network; otherwise, the communication node may set the second feedback information according to the preceding first feedback information in this embodiment..

In an embodiment, if the higher layer of the sending terminal receives second feedback information corresponding to an SL transmission, at least one of the operations described below may be included.

If the second feedback information is ACK information, the retransmission cache in the process corresponding to the SL transmission is cleared; if the second feedback information is NACK information, the process corresponding to the SL transmission is triggered to retransmit the SL transmission; or if the second feedback information is set as not receiving the first feedback information, the second feedback information may be treated same as ACK information.

In an embodiment, the SL transmission is the first groupcast type 1 transmission that enables feedback includes that the cast type in SCI corresponding to the SL transmission is indicated as the first groupcast type, that is, the SL transmission is a groupcast transmission with NACK Only feedback (the NACK Only feedback may refer to NACK only information feedback). In an embodiment, since the first groupcast type does not distinguish between member UEs, the first groupcast type can also be considered as broadcast, that is, when the broadcast transmission enables the NACK Only feedback, the broadcast transmission can still be referred to as the first groupcast type.

### Embodiment 4

In an embodiment, the SL transmission sent by the sending terminal is a groupcast type 1x (that is, the third groupcast type) transmission that enables feedback, and destination receiving terminals may be a group of UEs (each UE is a member), and the first feedback information of each member may include NACK information or ACK information. For each receiving terminal, if the receiving operation is correct, ACK information is fed back; if the SL transmission is detected but not received correctly, the first feedback information is sent as NACK information. For the groupcast type 1x, feedback resources corresponding to ACK information of all receiving terminals may be the same resource, and feedback resources corresponding to NACK information of all receiving terminals may also be the same resource. That is, resources corresponding to the ACK information and resources corresponding to the NACK information are distinguished, but member UEs within the group of the destination receiving terminals are not distinguished. Each member in the group may not have a separate identifier (that is, a Member ID), or all members in the group have the same Member ID, such as 0 or other values.

As long as the sending terminal detects NACK information feedback (that is, the first feedback information), the sending terminal can determine that the second feedback information to be reported to the higher layer is NACK information. That is, if the sending terminal receives the first feedback information including NACK information at any candidate feedback occasion or at least one candidate feedback occasion of multiple candidate feedback occasions, the second feedback information can be set as NACK information. If the sending terminal receives the first feedback information only including ACK information at multiple candidate feedback occasions, the second feedback information is set as ACK information; otherwise, the second feedback information may be set as NACK information. If the sending terminal does not receive the first feedback information at multiple candidate feedback occasions, the second feedback information may be set as NACK information, or the second feedback information is set as not receiving the first feedback information.

In an embodiment, the sending terminal may not receive the first feedback information at multiple candidate feedback occasions. It may be that the receiving terminal correctly receives the SL transmission but has no opportunity to send the first feedback information to the sending UE due to no LBT success. To avoid unnecessary retransmissions, the sending terminal may continue to request the receiving terminal to send the first feedback information. In an embodiment, if the sending terminal does not receive the first feedback information at multiple candidate feedback occasions, the second feedback information may be set as not detecting feedback.

In an embodiment, if the higher layer of the sending terminal receives second feedback information corresponding to an SL transmission, the operation of the SL transmission may be executed based according to the second feedback information, where the SL transmission may be a groupcast transmission that enables feedback. On this basis, executing the operation of the SL transmission according to the second feedback information may include at least one of the operations described below.

If the second feedback information is ACK information, the retransmission cache in the process corresponding to the SL transmission is cleared; if the second feedback information is NACK information, the process corresponding to the SL transmission is triggered to retransmit the SL transmission; if the second feedback information is not receiving the first feedback information, the retransmission cache in the process corresponding to the SL transmission may be cleared.

In an embodiment, the SL transmission being the groupcast type 1x transmission that enables feedback may include that the cast type in SCI corresponding to the SL transmission is indicated as the groupcast type 1x. In an embodiment, since the groupcast type 1x does not distinguish between member UEs, the groupcast type 1x can also be considered as broadcast, that is, when the broadcast transmission enables ACK information/NACK information feedback, the broadcast transmission can still be referred to as the groupcast type 1x.

### Embodiment 5

For the second groupcast type, second feedback information of a current SL transmission may be determined according to feedback corresponding to an SL transmission before the current SL transmission.

In an embodiment, the SL transmission sent by the sending terminal is the groupcast type 2 (that is, the second groupcast type) transmission that enables feedback, and destination receiving terminals may be a group of UEs (each UE is a member), and the first feedback information of each member may include NACK information or ACK information. For each receiving terminal, if the receiving operation is correct, ACK information is fed back; if the SL transmission is detected but not received correctly, the first feedback information is sent as NACK information. For the groupcast type 2, a respective feedback resource corresponding to each receiving terminal is used for feeding back ACK information or NACK information. That is, members in the group are distinguished, and each member in the group may have a separate identifier (that is, a Member ID) The sending terminal needs to detect ACK information feedback of all group members and then can determine that the second feedback information to be reported to the higher layer is ACK information; otherwise, the second feedback information is set as NACK information. For each group member, if the first feedback information of a member UE received by the sending terminal at at least one feedback occasion is ACK information, it can be determined that the first feedback information of the member UE is ACK information; otherwise, it can be determined that the first feedback information of the member UE is NACK information. If the first feedback information of each group member is ACK information, the sending terminal can set the second feedback information as ACK information, otherwise set the second feedback information as NACK information.

The preceding feedback occasion may not necessarily be one of multiple candidate feedback occasions corresponding to the current SL transmission, but may be a feedback occasion corresponding to a previous SL transmission. The previous SL transmission and the current SL transmission belong to the same group of SL transmissions. For example, the previous SL transmission and the current SL transmission transmit the same transmission block (TB) or belong to the same HARQ process. That is, the at least one feedback occasion belongs to multiple candidate feedback occasions corresponding to the SL transmission; or the at least one feedback occasion belongs to multiple candidate feedback occasions corresponding to the group of SL transmissions where the SL transmission is located.

In an embodiment, if the sending terminal never receives the first feedback information of one or more member UEs, it may be that the receiving terminal correctly receives the SL transmission but has no opportunity to send the first feedback information to the sending UE due to no LBT success. To avoid unnecessary retransmissions, the sending terminal may continue to request the receiving terminal to send the first feedback information. In an embodiment, if the sending terminal does not receive the first feedback information of one or more member UEs, the second feedback information may be set as not detecting feedback.

In an embodiment, if the higher layer of the sending terminal receives second feedback information corresponding to an SL transmission, the operation of the SL transmission may be executed according to the second feedback information, where the SL transmission may be a groupcast transmission that enables feedback. On this basis, executing the operation of the SL transmission according to the second feedback information may include at least one of the operations described below.

If the second feedback information is ACK information, the retransmission cache in the process corresponding to the SL transmission is cleared; if the second feedback information is NACK information, the process corresponding to the SL transmission is triggered to retransmit the SL transmission; if the second feedback information is not receiving the first feedback information, the retransmission cache in the process corresponding to the SL transmission may be cleared.

In an embodiment, the SL transmission being the second groupcast type transmission that enables feedback may include that the cast type in SCI corresponding to the SL transmission is indicated as the second groupcast type.

In an embodiment, the receiving terminal sending the first feedback information includes the following.

For the receiving terminal of the SL transmission, when the receiving terminal detects an SL transmission and is requested to send the first feedback information, the receiving terminal needs to send the first feedback information on a resource pool for receiving the SL transmission. If the SL transmission corresponds to multiple candidate feedback occasions in the time domain, the sending terminal may send the first feedback information at the multiple candidate feedback occasions. As described in the preceding embodiments, depending on different cast types of the SL transmission, feedback may be ACK information/NACK information or NACK Only feedback.

An embodiment of the present application further provides a sidelink communication method. FIG. 3 is a flowchart of another sidelink communication method according to an embodiment. As shown in FIG. 3, the method provided in this embodiment includes 210, 220 and 230. The method may be applied to a receiving terminal.

In 210, an SL transmission is received, where the SL transmission corresponds to a candidate feedback occasion set.

In 220, first feedback information is determined.

In 230, a decision procedure is executed before at least one candidate feedback occasion in the candidate feedback occasion set, and the first feedback information is sent at at least one candidate feedback occasion of candidate feedback occasions at which decision results are determined as success.

In the embodiment, the receiving terminal receives the SL transmission sent by a sending terminal, where an SL transmission may correspond to a candidate feedback occasion set. The receiving terminal determines the first feedback information. After the first feedback information is determined, the receiving terminal may execute the decision procedure before at least one candidate feedback occasion in the candidate feedback occasion set, and through the decision procedure, at least one candidate feedback occasion of which the decision result is success can be obtained, where the decision procedure may be used for determining whether to send the first feedback information. On this basis, at least one candidate feedback occasion may be selected from candidate feedback occasions at which decision results are determined as success for sending the first feedback information to the corresponding sending terminal.

In the embodiment, the receiving terminal receives the SL transmission and determines the first feedback information corresponding to the SL transmission, and on this basis, through the execution of the decision procedure, sends the first feedback information at at least one candidate feedback occasion of which the decision result is success to the corresponding sending terminal. In this manner, the first feedback information can be sent to the sending terminal, effectively preventing the sending terminal from making incorrect operations without acquiring the first feedback information. Therefore, the efficiency and reliability of network communication are improved.

In an embodiment, executing the decision procedure before at least one candidate feedback occasion in the candidate feedback occasion set, and sending the first feedback information at at least one candidate feedback occasion of candidate feedback occasions at which decision results are determined as success includes the following. A decision procedure is executed, in time sequence, before each candidate feedback occasion in the candidate feedback occasion set until the first feedback information is sent at a candidate feedback occasion of which the decision result is success, or until a decision of every candidate feedback occasion in the candidate feedback occasion set is completed.

In an embodiment, the decision procedure includes the channel access procedure; each candidate feedback occasion corresponds to a respective channel access type.

In this embodiment, the decision procedure is the channel access procedure (that is, the LBT procedure); different candidate feedback occasions correspond to respective channel access types.

In an embodiment, executing the decision procedure before the at least one candidate feedback occasion in the candidate feedback occasion set includes one of the following.

A first type channel access procedure is operated before a candidate feedback occasion, and the already operating first type channel access procedure is continuously executed before the next candidate feedback occasion; a first type channel access procedure is operated before a candidate feedback occasion, and a new first type channel access procedure is executed before the next candidate feedback occasion, where the new first type channel access procedure uses the same CAPC as the already operated first type channel access procedure; a first type channel access procedure is executed before a candidate feedback occasion, and a new first type channel access procedure is executed before the next candidate feedback occasion, where a CAPC used by the new first type channel access procedure is higher than a CAPC used by the already operated first type channel access procedure; a first type channel access procedure is executed before a candidate feedback occasion, and a new first type channel access procedure is executed before the next candidate feedback occasion, where a CAPC used by the new first type channel access procedure is lower than a CAPC used by the already operated first type channel access procedure; or a first type channel access procedure is executed before a candidate feedback occasion, and a second type channel access procedure is executed before the next candidate feedback occasion.

In an embodiment, executing the decision procedure before the at least one candidate feedback occasion in the candidate feedback occasion set includes the following. In the case where a channel access procedure executed before a candidate feedback occasion fails, a channel access type is changed and the channel access procedure is executed using the changed channel access type before the next candidate feedback occasion.

In an embodiment, a channel access type of each candidate feedback occasion is configured or predefined. Configuring or predefining the channel access type of the each candidate feedback occasion includes at least one of the following.

A channel access type of a candidate feedback occasion is configured or predefined as type 1, and a CAPC corresponding to type 1 is configured or predefined; a channel access type of a candidate feedback occasion is configured or predefined as type 2A; a channel access type of a candidate feedback occasion is configured or predefined as type 2B; or a channel access type of a candidate feedback occasion is configured or predefined as type 2C.

The sidelink communication method is exemplarily described below through different embodiments.

### Embodiment 6

When the receiving terminal determines that the first feedback information needs to be sent, the decision procedure may be executed before at least one candidate feedback occasion of multiple candidate feedback occasions in the time domain, so whether the first feedback information can be sent is determined. The decision procedure is the channel access procedure (that is, the LBT procedure).

In an embodiment, among multiple candidate feedback occasions in the time domain corresponding to the SL transmission, starting from the first candidate feedback occasion, the receiving terminal performs the LBT procedure before the first feedback occasion. If the LBT succeeds, the first feedback information can be sent; if the LBT fails, the LBT procedure is continuously performed before the next candidate feedback occasion, and so on, until the first feedback information is sent at a candidate feedback occasion of which the LBT succeeds, or until the decisions of the LBT procedures performed all candidate feedback occasions are completed (depending on which situation occurs first, the one that occurs first is followed), and then the flow of sending the first feedback information can be ended.

In an embodiment, the determination procedure may include the channel access procedure; each candidate feedback occasion corresponds to a respective channel access type (for example, type 1, type 2, type 2A, etc.). Continuously performing the LBT procedure before the next candidate feedback occasion above may include one of the following.

If the receiving terminal has already operated the type 1 channel access procedure before the previous candidate feedback occasion, the receiving terminal continuously use the already operated first type (that is, type 1) channel access procedure at the next candidate feedback occasion; the receiving terminal operates a new type 1 channel access procedure before the next candidate feedback occasion, and the new type 1 channel access procedure may use the same CAPC as the type 1 channel access procedure already operated at the previous candidate feedback occasion; the receiving terminal operates a new type 1 channel access procedure before the next candidate feedback occasion, and the CAPC used in the new type 1 channel access procedure may be higher than the CAPC used in the already operated type 1 channel access procedure; the receiving terminal operates a new type 1 channel access procedure before the next candidate feedback occasion, and the CAPC used in the new type 1 channel access procedure may be lower than the CAPC used in the already operated type 1 channel access procedure; the receiving terminal may operate the second type (that is, type 2) channel access procedure before the next candidate feedback occasion.

In an embodiment, if a channel access procedure executed by the receiving terminal before a candidate feedback occasion fails, the channel access type may be changed and the receiving terminal executes the channel access procedure using the changed channel access type at the next candidate feedback occasion. For example, when type 1 access used at candidate feedback occasion n fails, the receiving terminal may use the type 2 (2A/2B/2C) to access the channel (that is, execute the channel access procedure) at candidate feedback occasion n+1 (that is, the next candidate feedback occasion of candidate feedback occasion n); or when type 2A access used at candidate feedback occasion n fails, the receiving terminal may execute the channel access procedure using type 2B/2C at candidate feedback occasion n+1; or when type 2B access used at candidate feedback occasion n fails, the receiving terminal may execute the channel access procedure using type 2C at candidate feedback occasion n+1.

In an embodiment, if a channel access procedure executed by the receiving terminal before a candidate feedback occasion fails, the channel access type may be changed so that the receiving terminal monitors more channels at the next candidate feedback occasion to avoid conflicts. For example, when type 2 access used at candidate feedback occasion n fails, the receiving terminal may execute the channel access procedure using type 1 to at candidate feedback occasion n+1; or when type 2B access used fails candidate feedback occasion n at, the receiving terminal may execute the channel access procedure using type 2A at candidate feedback occasion n+1.

### Embodiment 7

When the receiving terminal determines that the first feedback information needs to be sent, the decision procedure is executed before at least one candidate feedback occasion of multiple candidate feedback occasions in the time domain, so whether the first feedback information can be sent is determined. The decision procedure is the channel access procedure (that is, the LBT procedure).

In an embodiment, configuring or predefining the channel access type of the LBT procedure of the each candidate feedback occasion includes at least one of the following.

A channel access type of a candidate feedback occasion is configured or predefined as type 1, and a CAPC corresponding to type 1 is configured or predefined; a channel access type of a candidate feedback occasion is configured or predefined as type 2A; a channel access type of a candidate feedback occasion is configured or predefined as type 2B; or a channel access type of a candidate feedback occasion is configured or predefined as type 2C.

In an embodiment, the channel access type of each slot may be configured or predefined so that the receiving terminal can access the channel easier. For example, the later the candidate feedback occasion, probably the shorter the LBT duration corresponding to the channel access type used by the candidate feedback occasion, as shown below

If it is configured or predefined that an n-th candidate feedback occasion uses type 1, and the CAPC is a p contention channel, the next candidate feedback occasion may be configured or predefined to use the next allowed contention access channel with a lower CAPC, where the value of the lower CAPC may represent the probably shorter LBT duration or a higher priority. Alternatively, if an n-th candidate feedback occasion is configured or predefined to use type 1, and the CAPC is a p contention channel, the next candidate feedback occasion may be configured or predefined to use type 2 to access the channel. Alternatively, the last candidate feedback occasion is configured or predefined to use type 2C, type 2B or type 2A to access the channel.

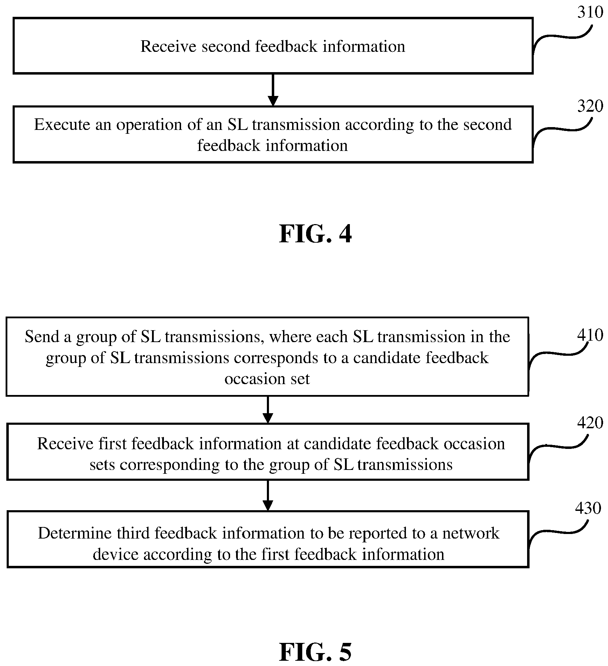

An embodiment of the present application further provides a sidelink communication method. FIG. 4 is a flowchart of another sidelink communication method according to an embodiment. As shown in FIG. 4, the method provided in this embodiment includes 310 and 320. The method may be applied to a higher layer.

In 310, second feedback information is received.

In 320, an operation of an SL transmission is executed according to the second feedback information.

In the embodiment, the higher layer receives the second feedback information reported by a sending terminal and can execute the operation of the SL transmission according to the received second feedback information. The high layer executes the operation of the SL transmission according to the received second feedback information, so the efficiency and reliability of network communication can be improved.

In an embodiment, the SL transmission is a unicast transmission that enables feedback. Executing the operation of the SL transmission according to the second feedback information includes at least one of the following.

In the case where the second feedback information includes ACK information, a retransmission cache in a process corresponding to the SL transmission is cleared; in the case where the second feedback information includes NACK information, a process corresponding to the SL transmission is triggered to retransmit the SL transmission; or in the case where the second feedback information includes not receiving first feedback information, a process corresponding to the SL transmission is triggered to retransmit the SL transmission, or a process corresponding to the SL transmission is triggered to re-request to receive the first feedback information.

In an embodiment, the SL transmission is a groupcast transmission that enables feedback. Executing the operation of the SL transmission according to the second feedback information includes at least one of the following.

In the case where the second feedback information includes ACK information, a retransmission cache in a process corresponding to the SL transmission is cleared; in the case where the second feedback information includes NACK information, a process corresponding to the SL transmission is triggered to retransmit the SL transmission; or in the case where the second feedback information includes not receiving first feedback information, a retransmission cache in a process corresponding to the SL transmission is cleared.

An embodiment of the present application further provides a sidelink communication method. FIG. 5 is a flowchart of another sidelink communication method according to an embodiment. As shown in FIG. 5, the method provided in this embodiment includes 410, 420 and 430. The method may be applied to a sending terminal for a group of SL transmissions.

In 410, a group of SL transmissions are sent, where each SL transmission in the group of SL transmissions corresponds to a candidate feedback occasion set.

In 420, first feedback information is received at candidate feedback occasion sets corresponding to the group of SL transmissions.

In 430, third feedback information to be reported to a network device is determined according to the first feedback information.

In the embodiment, the sending terminal first sends a group of SL transmissions to a corresponding receiving terminal, where each SL transmission in the group of SL transmissions may correspond to a candidate feedback occasion set; then the first feedback information sent by the receiving terminal is received at the candidate feedback occasion sets corresponding to the group of SL transmissions; finally, the third feedback information can be determined according to the first feedback information, and the determined third feedback information is reported to the network device, where the network device may be a base station.

In this embodiment, the sending terminal sends a group of SL transmissions and receives the first feedback information returned by the corresponding receiving terminal at the candidate feedback occasion sets. On this basis, the sending terminal reports the third feedback information to a higher layer according to the received first feedback information, so it can be effectively prevented that the sending terminal makes incorrect operations without acquiring the first feedback information, and thus the efficiency and reliability of network communication can be improved.

In an embodiment, the group of SL transmissions include at least one SL transmission. Determining the third feedback information to be reported to the higher layer according to the first feedback information includes the following.

Second feedback information corresponding to the each SL transmission is determined according to first feedback information received at the candidate feedback occasion set corresponding to the each SL transmission; and the third feedback information is determined according to the second feedback information corresponding to the each SL transmission.

For the method for determining the second feedback information corresponding to the each SL transmission, reference may be made to any of the preceding embodiments.

In an embodiment, the SL transmission is a unicast transmission that enables feedback. Determining the third feedback information according to the second feedback information corresponding to the each SL transmission includes the following.

In the case where second feedback information corresponding to at least one SL transmission or the last SL transmission in the group of SL transmissions is ACK information, the third feedback information is set as ACK information, otherwise, the third feedback information is set as NACK information; or the third feedback information is set to be the same as second feedback information corresponding to the last SL transmission in the group of SL transmissions.

In an embodiment, the SL transmission is a first groupcast type transmission that enables feedback. Determining the third feedback information according to the second feedback information corresponding to the each SL transmission includes the following.

In the case where second feedback information corresponding to the last SL transmission in the group of SL transmissions is ACK information, the third feedback information is set as ACK information; otherwise, the third feedback information is set as NACK information.

In an embodiment, the SL transmission is a second groupcast type transmission that enables feedback. Determining the third feedback information according to the second feedback information corresponding to the each SL transmission includes the following.

In the case where second feedback information corresponding to at least one SL transmission or the last SL transmission in the group of SL transmissions is ACK information, the third feedback information is set as ACK information; otherwise, the third feedback information is set as NACK information.

In an embodiment, the SL transmission is a third groupcast type transmission that enables feedback. Determining the third feedback information according to the second feedback information corresponding to the each SL transmission includes the following.

In the case where second feedback information corresponding to the last SL transmission in the group of SL transmissions is ACK information, the third feedback information is set as ACK information; otherwise, the third feedback information is set as NACK information.

The sidelink communication method is exemplarily described below through different embodiments.

### Embodiment 8

In an embodiment, the transmission resource of the sending terminal may be scheduled by a network device (such as a base station), and then a group of SL transmissions are sent on the scheduled resource. For example, when the base station schedules UE-A to perform resources of a first transmission and two retransmissions of a TB, at this time, UE-A has three transmission opportunities or transmission resources on the allocated transmission resources, and each transmission opportunity may correspond to a candidate feedback occasion set. That is, this group of SL transmissions may include up to three candidate feedback occasion sets, which depends on the actual number of SL transmissions in the group of SL transmissions. It is assumed that UE-A performs N SL transmissions, where N is less than or equal to 3 (the number of resources allocated to the base station).

In an embodiment, a group of SL transmissions are sent, where each SL transmission in the group of SL transmissions may correspond to a candidate feedback occasion set. The sending terminal receives first feedback information at a group of candidate feedback occasion sets corresponding to the group of SL transmissions, and determines third feedback information to be reported to a network device (such as a base station) according to the first feedback information. Each candidate feedback occasion set includes the same or different numbers of candidate feedback occasions.

In an embodiment, if a group SL transmission only include one SL transmission, the method in the preceding embodiment of the present application for determining the second feedback information may be used for determining the third feedback information, that is, the method for determining the third feedback information is the same as the method for determining the second feedback information.

In an embodiment, if a group of SL transmissions include at least one SL transmission, the method in the preceding embodiment of the present application for determining the second feedback information may be used. Second feedback information corresponding to each SL transmission is first determined, and then on this basis, the third feedback information to be reported to the base station may be determined according to the second feedback information corresponding to the each SL transmission.

In an embodiment, if the SL transmission is a unicast transmission, determining the third feedback information according to the second feedback information corresponding to the each SL transmission may include the following. In the case where second feedback information corresponding to at least one SL transmission or the last SL transmission in the group of SL transmissions is ACK information, the third feedback information may be set as ACK information, otherwise, the third feedback information may be set as NACK information; or the third feedback information may be set as second feedback information corresponding to the last SL transmission in the group of SL transmissions.

In an embodiment, if the SL transmission is a groupcast type 1 transmission (that is, a first groupcast type transmission), determining the third feedback information according to the second feedback information corresponding to the each SL transmission may include the following. If second feedback information corresponding to the last SL transmission in the group of SL transmissions is ACK information, for example, the first feedback information is no feedback, the third feedback information may be set as ACK information, otherwise, the third feedback information may be set as NACK information.

In an embodiment, if the SL transmission is a groupcast type 1x transmission (that is, a third groupcast type transmission), determining the third feedback information according to the second feedback information corresponding to the each SL transmission may include the following. If second feedback information corresponding to the last SL transmission in the group of SL transmissions is ACK information (for example, ACK information is received and no NACK information is not received), the third feedback information may be set as ACK information, otherwise, the third feedback information may be set as NACK information.

In an embodiment, if the SL transmission is a groupcast type 2 transmission (that is, a second groupcast type transmission), determining the third feedback information according to the second feedback information corresponding to the each SL transmission may include the following. If second feedback information corresponding to at least one SL transmission or the last SL transmission in the group of SL transmissions is ACK information (for example, ACK information feedback of each member in the group is detected), the third feedback information may be set as ACK information, otherwise, the third feedback information may be set as NACK information.

In the present application, first feedback information may be a feedback result detected at a feedback occasion, second feedback information may be a piece of feedback information corresponding to an SL transmission, and third feedback information may be a piece of feedback information corresponding to a group of SL transmissions.

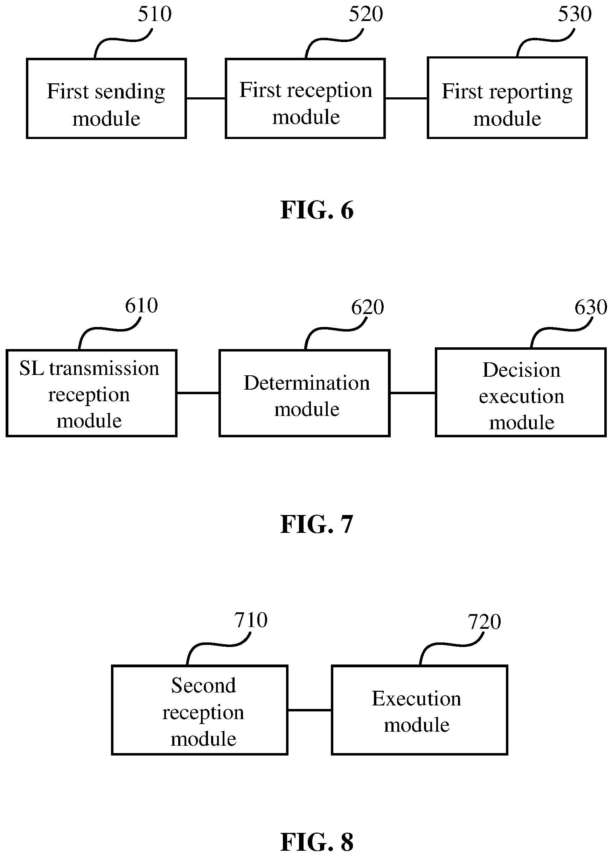

An embodiment of the present application further provides a sidelink communication apparatus. FIG. 6 is a structural diagram of a sidelink communication apparatus according to an embodiment. As shown in FIG. 6, the sidelink communication apparatus includes a first sending module 510, a first reception module 520 and a first reporting module 530.

The first sending module 510 is configured to send an SL transmission, where the SL transmission corresponds to a candidate feedback occasion set; the first reception module 520 is configured to receive first feedback information at the candidate feedback occasion set; and the first report module 530 is configured to report second feedback information to a higher layer according to the first feedback information.

In this embodiment, the sending terminal receives the first feedback information returned by the corresponding receiving terminal at the candidate feedback occasion set. On this basis, the sending terminal reports the second feedback information to the higher layer according to the received first feedback information, so it can be effectively prevented that the sending terminal makes incorrect operations without acquiring the first feedback information, and thus the efficiency and reliability of network communication can be improved.

In an embodiment, the SL transmission is a unicast transmission that enables feedback, and the first feedback information includes NACK information or ACK information.

In an embodiment, in the case where the first feedback information is received at any candidate feedback occasion or at least one candidate feedback occasion in the candidate feedback occasion set, the second feedback information is set to be the same as the received first feedback information.

In an embodiment, in the case where the first feedback information is not received at the candidate feedback occasion set, the second feedback information is set as NACK information, or the second feedback information is set as not receiving the first feedback information.

In an embodiment, the SL transmission is a first groupcast type transmission that enables feedback, and the first feedback information includes NACK information.

In an embodiment, in the case where the first feedback information is received at any candidate feedback occasion or at least one candidate feedback occasion in the candidate feedback occasion set, the second feedback information is set as NACK information.

In an embodiment, in the case where the first feedback information is not received at the candidate feedback occasion set, the second feedback information is set as ACK information, or the second feedback information is set as not receiving the first feedback information.

In an embodiment, in the case where a transmission block carried by the SL transmission is a first transmission, or a transmission block carried by the SL transmission is an n-th transmission, where n is less than or equal to N, the second feedback information is set as NACK information, where N is a positive integer.

In an embodiment, the SL transmission is a second groupcast type transmission that enables feedback, and first feedback information of each member includes NACK information or ACK information.

In an embodiment, in the case where first feedback information of a member UE received at at least one candidate feedback occasion is ACK information, it is determined that the first feedback information of the member UE is ACK information; otherwise, it is determined that the first feedback information of the member UE is NACK information.

In an embodiment, the at least one feedback occasion belongs to the candidate feedback occasion set corresponding to the SL transmission; or the at least one feedback occasion belongs to candidate feedback occasion sets corresponding to a group of SL transmissions where the SL transmission is located.

In an embodiment, in the case where first feedback information of each member in a member group is received as ACK information, the second feedback information is set as ACK information; otherwise, the second feedback information is set as NACK information.

In an embodiment, the SL transmission is a third groupcast type transmission that enables feedback, and first feedback information of each member includes NACK information or ACK information.

In an embodiment, in the case where the first feedback information is received at any candidate feedback occasion or at least one candidate feedback occasion in the candidate feedback occasion set and the first feedback information includes the NACK information, the second feedback information is set as NACK information.

In an embodiment, in the case where the first feedback information received at the candidate feedback occasion set only includes the ACK information, the second feedback information is set as ACK information; otherwise, the second feedback information is set as NACK information.

In an embodiment, in the case where the first feedback information is not received at the candidate feedback occasion set, the second feedback information is set as NACK information, or the second feedback information is set as not receiving the first feedback information.

In an embodiment, the SL transmission belongs to a group of SL transmissions; data blocks of the group of SL transmissions are the same, or the group of SL transmissions belong to an SL process, or the group of SL transmissions include at least one SL transmission indicated by a network or the higher layer or a transmission corresponding to at least one grant resource.

The sidelink communication apparatus provided in this embodiment and the sidelink communication method provided in the preceding embodiments belong to the same concept. For technical details not described in detail in this embodiment, reference may be made to any one of the preceding embodiments, and this embodiment has the same effects as the sidelink communication method performed.

An embodiment of the present application further provides a sidelink communication apparatus. FIG. 7 is a structural diagram of a sidelink communication apparatus according to an embodiment. As shown in FIG. 7, the sidelink communication apparatus includes an SL transmission reception module 610, a determination module 620 and a decision execution module 630.

The SL transmission reception module 610 is configured to receive an SL transmission, where the SL transmission corresponds to a candidate feedback occasion set.

The determination module 620 is configured to determine first feedback information.

The decision execution module 630 is configured to execute a decision procedure before at least one candidate feedback occasion in the candidate feedback occasion set, and send the first feedback information at at least one candidate feedback occasion of candidate feedback occasions at which decision results are determined as success.

According to the sidelink communication apparatus in the embodiment, a receiving terminal receives the SL transmission and determines the first feedback information corresponding to the SL transmission, and on this basis, through the execution of the decision procedure, sends the first feedback information at at least one candidate feedback occasion of which the decision result is success to a corresponding sending terminal. In this manner, the first feedback information can be sent to the sending terminal, effectively preventing the sending terminal from making incorrect operations without acquiring the first feedback information. Therefore, the efficiency and reliability of network communication are improved.

In an embodiment, the decision execution module 630 is configured to execute the decision procedure sequentially before each candidate feedback occasion in the candidate feedback occasion set until the first feedback information is sent at a candidate feedback occasion of which a decision result is success, or until decision of all candidate feedback occasions is completed.

In an embodiment, the decision procedure includes a channel access procedure; each candidate feedback occasion corresponds to a respective channel access type.

In an embodiment, executing the decision procedure before the at least one candidate feedback occasion in the candidate feedback occasion set includes one of the following.

A first type channel access procedure is operated before a candidate feedback occasion, and the already operated first type channel access procedure is continuously executed before the next candidate feedback occasion; a first type channel access procedure is operated before a candidate feedback occasion, and a new first type channel access procedure is executed before the next candidate feedback occasion, where the new first type channel access procedure uses the same CAPC as the already operated first type channel access procedure; a first type channel access procedure is executed before a candidate feedback occasion, and a new first type channel access procedure is executed before the next candidate feedback occasion, where a CAPC used by the new first type channel access procedure is higher than a CAPC used by the already operated first type channel access procedure; a first type channel access procedure is executed before a candidate feedback occasion, and a new first type channel access procedure is executed before the next candidate feedback occasion, where a CAPC used by the new first type channel access procedure is lower than a CAPC used by the already operated first type channel access procedure; or a first type channel access procedure is executed before a candidate feedback occasion, and a second type channel access procedure is executed before the next candidate feedback occasion.

In an embodiment, executing the decision procedure before the at least one candidate feedback occasion in the candidate feedback occasion set includes the following. In the case where a channel access procedure executed before a candidate feedback occasion fails, a channel access type is changed and the channel access procedure is executed using the changed channel access type before the next candidate feedback occasion.

In an embodiment, a channel access type of each candidate feedback occasion is configured or predefined. Configuring or predefining the channel access type of the each candidate feedback occasion includes at least one of the following.

A channel access type of a candidate feedback occasion is configured or predefined as type 1, and a CAPC corresponding to type 1 is configured or predefined; a channel access type of a candidate feedback occasion is configured or predefined as type 2A; a channel access type of a candidate feedback occasion is configured or predefined as type 2B; or a channel access type of a candidate feedback occasion is configured or predefined as type 2C.

The sidelink communication apparatus provided in this embodiment and the sidelink communication method provided in the preceding embodiments belong to the same concept. For technical details not described in detail in this embodiment, reference may be made to any one of the preceding embodiments, and this embodiment has the same effects as the sidelink communication method performed.

An embodiment of the present application further provides a sidelink communication apparatus. FIG. 8 is a structural diagram of a sidelink communication apparatus according to an embodiment. As shown in FIG. 8, the sidelink communication apparatus includes a second reception module 710 and an execution module 720.

The second reception module 710 is configured to receive second feedback information; the execution module 720 is configured to execute an operation of an SL transmission according to the second feedback information.

According to the sidelink communication apparatus in the embodiment, a higher layer receives the second feedback information reported by a sending terminal and can execute the operation of the SL transmission according to the received second feedback information. The high layer executes the operation of the SL transmission according to the received second feedback information, so the efficiency and reliability of network communication can be improved.

In an embodiment, the SL transmission is a unicast transmission that enables feedback. Executing the operation of the SL transmission according to the second feedback information includes at least one of the following.

In the case where the second feedback information includes ACK information, a retransmission cache in a process corresponding to the SL transmission is cleared; in the case where the second feedback information includes NACK information, a process corresponding to the SL transmission is triggered to retransmit the SL transmission; or in the case where the second feedback information includes not receiving first feedback information, a process corresponding to the SL transmission is triggered to retransmit the SL transmission, or a process corresponding to the SL transmission is triggered to re-request to receive the first feedback information.

In an embodiment, the SL transmission is a groupcast transmission that enables feedback. Executing the operation of the SL transmission according to the second feedback information includes at least one of the following.

In the case where the second feedback information includes ACK information, a retransmission cache in a process corresponding to the SL transmission is cleared; in the case where the second feedback information includes NACK information, a process corresponding to the SL transmission is triggered to retransmit the SL transmission; or in the case where the second feedback information includes not receiving first feedback information, a retransmission cache in a process corresponding to the SL transmission is cleared.

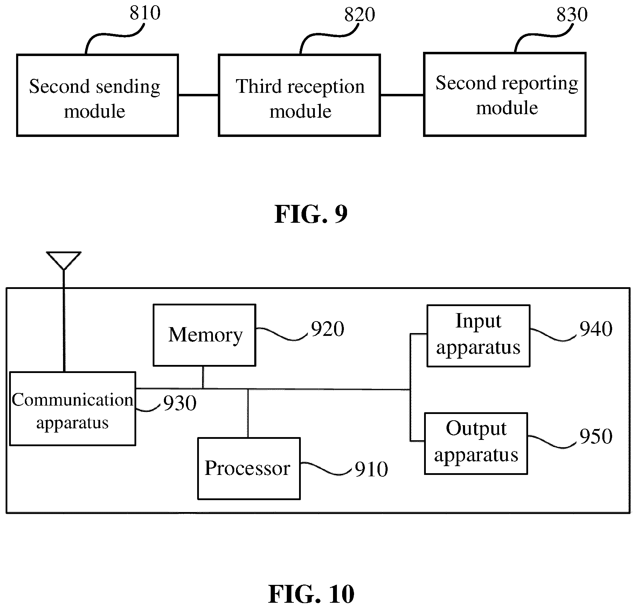

An embodiment of the present application further provides a sidelink communication apparatus. FIG. 9 is a structural diagram of a sidelink communication apparatus according to an embodiment. As shown in FIG. 9, the sidelink communication apparatus includes a second sending module 810, a third reception module 820 and a second reporting module 830.

The second sending module 810 is configured to send a group of SL transmissions, where each SL transmission in the group of SL transmissions corresponds to a candidate feedback occasion set.

The third reception module 820 is configured to receive first feedback information at candidate feedback occasion sets corresponding to the group of SL transmissions.

The second reporting module 830 is configured to determine third feedback information to be reported to a network device according to the first feedback information.

According to the sidelink communication apparatus in this embodiment, a sending terminal sends a group of SL transmissions and receives the first feedback information returned by a corresponding receiving terminal at the candidate feedback occasion sets. On this basis, the sending terminal reports the third feedback information to a higher layer according to the received first feedback information, so it can be effectively prevented that the sending terminal makes incorrect operations without acquiring the first feedback information, and thus the efficiency and reliability of network communication can be improved.

In an embodiment, the group of SL transmissions include at least one SL transmission. The second reporting module 830 includes a first determination unit and a second determination unit.

The first determination unit is configured to determine second feedback information corresponding to the each SL transmission according to first feedback information received at the candidate feedback occasion set corresponding to the each SL transmission; and the second determination unit is configured to determine the third feedback information according to the second feedback information corresponding to the each SL transmission.

In an embodiment, the SL transmission is a unicast transmission that enables feedback.

The second determination unit is configured to, in the case where second feedback information corresponding to at least one SL transmission or the last SL transmission in the group of SL transmissions is ACK information, set the third feedback information as ACK information, otherwise, set the third feedback information as NACK information; or set the third feedback information to be the same as second feedback information corresponding to the last SL transmission in the group of SL transmissions.

In an embodiment, the SL transmission is a first groupcast type transmission that enables feedback.

The second determination unit is configured to, in the case where second feedback information corresponding to the last SL transmission in the group of SL transmissions is ACK information, set the third feedback information as ACK information; otherwise, set the third feedback information as NACK information.

In an embodiment, the SL transmission is a second groupcast type transmission that enables feedback.

The second determination unit is configured to, in the case where second feedback information corresponding to at least one SL transmission or the last SL transmission in the group of SL transmissions is ACK information, set the third feedback information as ACK information; otherwise, set the third feedback information as NACK information.

In an embodiment, the SL transmission is a third groupcast type transmission that enables feedback.

The second determination unit is configured to, in the case where second feedback information corresponding to the last SL transmission in the group of SL transmissions is ACK information, set the third feedback information as ACK information; otherwise, set the third feedback information as NACK information.

An embodiment of the present application further provides a communication node. FIG. 10 is a structural diagram of hardware of a communication node according to an embodiment. As shown in FIG. 10, the communication node provided in the present application includes a memory 920, a processor 910 and a computer program stored in the memory and executable by the processor, where the processor 910, when executing the program, performs the preceding sidelink communication method.

The communication node may further include the memory 920; one or more processors 910 may be provided in the communication node, and one processor 910 is used as an example in FIG. 10; the memory 920 is configured to store one or more programs; when executed by the one or more processors 910, the one or more programs cause the one or more processors 910 to perform the sidelink communication method in the embodiments of the present application.

The communication node further includes a communication apparatus 930, an input apparatus 940 and an output apparatus 950.

The processor 910, the memory 920, the communication apparatus 930, the input apparatus 940 and the output apparatus 950 in the communication node may be connected through a bus or in other manners, and the connection through the bus is shown as an example in FIG. 10.

The input apparatus 940 may be configured to receive inputted digital or character information and generate key signal input related to user settings and function control of the communication node. The output apparatus 950 may include a display device such as a display screen.

The communication apparatus 930 may include a receiver and a sender. The communication apparatus 930 is configured to perform information transceiving communication under the control of the processor 910.

The memory 920, as a computer-readable storage medium, may be configured to store software programs and computer-executable programs and modules, such as program instructions/modules (for example, the first sending module 510, the first reception module 520 and the first reporting module 530 in the sidelink communication apparatus) corresponding to the sidelink communication method according to the embodiments of the present application; or such as program instructions/modules (for example, the SL transmission reception module 610, the determination module 620 and the decision execution module 630 in the sidelink communication apparatus) corresponding to the sidelink communication method according to the embodiments of the present application; or such as program instructions/modules (for example, the second reception module 710 and the execution module 720 in the sidelink communication apparatus) corresponding to the sidelink communication method according to the embodiments of the present application; or such as program instructions/modules (for example, the second sending module 810, the third reception module 820 and the second reporting module 830 in the sidelink communication apparatus) corresponding to the sidelink communication method according to the embodiments of the present application The memory 920 may include a program storage region and a data storage region, where the program storage region may store an operating system and an application program required by at least one function, and the data storage region may store data and the like created according to the use of the communication node. Additionally, the memory 920 may include a high-speed random-access memory and may also include a nonvolatile memory, such as at least one magnetic disk memory, a flash memory or another nonvolatile solid-state memory. In some examples, the memory 920 may include memories which are remotely disposed relative to the processor 910, and these remote memories may be connected to the communication node via a network. Examples of the preceding network include, but are not limited to, the Internet, an intranet, a local area network, a mobile communication network and a combination thereof.

An embodiment of the present application further provides a computer-readable storage medium. The storage medium stores a computer program which, when executed by a processor, causes the processor to perform any sidelink communication method according to the embodiments of the present application. Optionally, the sidelink communication method includes the following. An SL transmission is sent, where the SL transmission corresponds to a candidate feedback occasion set; first feedback information is received at the candidate feedback occasion set; and second feedback information is reported to a higher layer according to the first feedback information. Optionally, the sidelink communication method includes the following. An SL transmission is received, where the SL transmission corresponds to a candidate feedback occasion set; first feedback information is determined; and a decision procedure is executed before at least one candidate feedback occasion in the candidate feedback occasion set, and the first feedback information is sent at at least one candidate feedback occasion of candidate feedback occasions at which decision results are determined as success. Optionally, the sidelink communication method includes the following. Second feedback information is received; and an operation of an SL transmission is executed according to the second feedback information. Optionally, the sidelink communication method includes the following. A group of SL transmissions are sent, where each SL transmission in the group of SL transmissions corresponds to a candidate feedback occasion set; first feedback information is received at candidate feedback occasion sets corresponding to the group of SL transmissions; and third feedback information to be reported to a network device is determined according to the first feedback information.

A computer storage medium in an embodiment of the present application may adopt any combination of one or more computer-readable media. The computer-readable media may be computer-readable signal media or computer-readable storage media. For example, a computer-readable storage medium may be, but is not limited to, an electrical, magnetic, optical, electromagnetic, infrared or semiconductor system, apparatus, or device or any combination thereof. Examples (a non-exhaustive list) of the computer-readable storage medium include an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory, a magnetic memory or any suitable combination thereof. The computer-readable storage medium may be any tangible medium including or storing a program. The program may be used by or used in conjunction with an instruction execution system, apparatus, or device.

A computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal or any suitable combination thereof. The computer-readable signal medium may also be any computer-readable medium other than the computer-readable storage medium. The computer-readable medium may send, propagate, or transmit a program used by or used in conjunction with an instruction execution system, apparatus or device.

Program codes included on the computer-readable medium may be transmitted by any suitable medium including, but not limited to, a wireless medium, a wire, an optical cable, a radio frequency (RF) or any suitable combination thereof.

Computer program codes for performing operations of the present application may be written in one or more programming languages or a combination thereof. The programming languages include object-oriented programming languages such as Java, Smalltalk, and C++ and may further include conventional procedural programming languages such as "C" or similar programming languages. The program codes may be executed entirely on a user computer, executed partly on a user computer, executed as a stand-alone software package, executed partly on a user computer and partly on a remote computer or executed entirely on a remote computer or a server. In the case where the remote computer is involved, the remote computer may be connected to the user computer through any type of network including a local area network (LAN) or a wide area network (WAN), or may be connected to an external computer (for example, via the Internet provided by an Internet service provider).

The preceding are only example embodiments of the present application and are not intended to limit the scope of the present application.

It is to be understood by those skilled in the art that the term "user terminal" encompasses any suitable type of radio user device, for example, a mobile phone, a portable data processing apparatus, a portable web browser or a vehicle-mounted mobile station.

Generally speaking, embodiments of the present application may be implemented in hardware or special-purpose circuits, software, logic or any combination thereof. For example, some aspects may be implemented in hardware while other aspects may be implemented in firmware or software executable by a controller, a microprocessor or another computing apparatus, though the present application is not limited thereto.

The embodiments of the present application may be implemented through the execution of computer program instructions by a data processor of a mobile apparatus, for example, implemented in a processor entity, by hardware or by a combination of software and hardware. The computer program instructions may be assembly instructions, instruction set architecture (ISA) instructions, machine instructions, machine-related instructions, microcodes, firmware instructions, status setting data or source or object codes written in any combination of one or more programming languages.

A block diagram of any logic flow among the drawings of the present application may represent program steps, may represent interconnected logic circuits, modules and functions, or may represent a combination of program steps and logic circuits, modules and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). The computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA) and a processor based on a multi-core processor architecture.

## Claims

1. A sidelink communication method, comprising:
sending an SL transmission, wherein the SL transmission corresponds to a candidate feedback occasion set;
receiving first feedback information at the candidate feedback occasion set; and
reporting second feedback information to a higher layer according to the first feedback information.

2. The method according to claim 1, wherein the SL transmission is a unicast transmission that enables feedback, and the first feedback information comprises negative acknowledgement, NACK, information or acknowledgement, ACK, information.

3. The method according to claim 2, further comprising:
in response to receiving the first feedback information at one candidate feedback occasion or at least one candidate feedback occasion in the candidate feedback occasion set, setting the second feedback information to be the same as the received first feedback information.

4. The method according to claim 2, further comprising:
in response to not receiving the first feedback information at the candidate feedback occasion set, setting the second feedback information as the NACK information, or setting the second feedback information as not receiving the first feedback information.

5. The method according to claim 1, wherein the SL transmission is a first groupcast type transmission that enables feedback, and the first feedback information comprises NACK information.

6. The method according to claim 5, further comprising:
in response to receiving the first feedback information at one candidate feedback occasion or at least one candidate feedback occasion in the candidate feedback occasion set, setting the second feedback information as the NACK information.

7. The method according to claim 5, further comprising:
in response to not receiving the first feedback information at the candidate feedback occasion set, setting the second feedback information as ACK information, or setting the second feedback information as not receiving the first feedback information.

8. The method according to claim 5, further comprising:
in response to a transmission block carried by the SL transmission belongs to a first transmission, or a transmission block carried by the SL transmission belongs to an n-th transmission, wherein n is less than or equal to N, setting the second feedback information as the NACK information, wherein N is a positive integer.

9. The method according to claim 1, wherein the SL transmission is a second groupcast type transmission that enables feedback, and first feedback information of each member comprises NACK information or ACK information.

10. The method according to claim 9, further comprising:
in response to first feedback information of a member user equipment, UE, received at at least one candidate feedback occasion being ACK information, determining that the first feedback information of the member UE is the ACK information;
in response to not receiving first feedback information of a member UE, which is ACK information, at any candidate feedback occasion, determining that the first feedback information of the member UE is NACK information.

11. The method according to claim 10, wherein the at least one feedback occasion belongs to the candidate feedback occasion set corresponding to the SL transmission; or the at least one feedback occasion belongs to candidate feedback occasion sets corresponding to a group of SL transmissions where the SL transmission is located.

12. The method according to claim 9, further comprising:
in response to first feedback information of each member in a member group being received as ACK information, setting the second feedback information as ACK information; in response to first feedback information of at least one member in the member group being not received as ACK information, setting the second feedback information as NACK information.

13. The method according to claim 1, wherein the SL transmission is a third groupcast type transmission that enables feedback, and first feedback information of each member comprises NACK information or ACK information.

14. The method according to claim 13, further comprising:
in response to the first feedback information being received at one candidate feedback occasion or at least one candidate feedback occasion in the candidate feedback occasion set and the first feedback information comprising the NACK information, setting the second feedback information as NACK information.

15. The method according to claim 13, further comprising:
in response to the first feedback information received at the candidate feedback occasion set only comprising the ACK information, setting the second feedback information as ACK information; in response to the first feedback information received at the candidate feedback occasion set comprising not only the ACK information, setting the second feedback information as NACK information.

16. The method according to claim 13, further comprising:
in response to not receiving the first feedback information at the candidate feedback occasion set, setting the second feedback information as NACK information, or setting the second feedback information as not receiving the first feedback information.

17. The method according to claim 1, wherein the SL transmission belongs to a group of SL transmissions; and
data blocks of the group of SL transmissions are the same, or the group of SL transmissions belong to an SL process, or the group of SL transmissions comprise at least one SL transmission indicated by a network or the higher layer, or the group of SL transmissions comprise a transmission, indicated by a network or the higher layer, corresponding to at least one grant resource.

18. A sidelink, SL, communication method, comprising:
receiving an SL transmission, wherein the SL transmission corresponds to a candidate feedback occasion set;
determining first feedback information; and
executing a decision procedure before at least one candidate feedback occasion in the candidate feedback occasion set, and sending the first feedback information at at least one candidate feedback occasion of candidate feedback occasions at which decision results are determined as success.

19. The method according to claim 18, wherein executing the decision procedure before the at least one candidate feedback occasion in the candidate feedback occasion set, and sending the first feedback information at the at least one candidate feedback occasion of the candidate feedback occasions at which the decision results are determined as success comprises:
executing, in time sequence, a decision procedure before each candidate feedback occasion in the candidate feedback occasion set until the first feedback information is sent at a candidate feedback occasion at which a decision result is determined as success, or until a decision of every candidate feedback occasion in the candidate feedback occasion set is completed.

20. The method according to claim 18, wherein the decision procedure comprises a channel access procedure; and
each of the at least one candidate feedback occasion corresponds to a respective channel access type.

21. The method according to claim 20, wherein executing the decision procedure before the at least one candidate feedback occasion in the candidate feedback occasion set comprises one of:
operating a first type channel access procedure before a candidate feedback occasion, and continuing executing the already operating first type channel access procedure before a next candidate feedback occasion;
operating a first type channel access procedure before a candidate feedback occasion, and executing a new first type channel access procedure before a next candidate feedback occasion, wherein the new first type channel access procedure uses a same channel access priority class, CAPC, as the already operated first type channel access procedure;
operating a first type channel access procedure before a candidate feedback occasion, and executing a new first type channel access procedure before a next candidate feedback occasion, wherein a CAPC used by the new first type channel access procedure is higher than a CAPC used by the already operated first type channel access procedure;
operating a first type channel access procedure before a candidate feedback occasion, and executing a new first type channel access procedure before a next candidate feedback occasion, wherein a CAPC used by the new first type channel access procedure is lower than a CAPC used by the already operated first type channel access procedure; or
executing a first type channel access procedure before a candidate feedback occasion, and executing a second type channel access procedure before a next candidate feedback occasion.

22. The method according to claim 20, wherein executing the decision procedure before the at least one candidate feedback occasion in the candidate feedback occasion set comprises:
in response to failing to execute a channel access procedure before a candidate feedback occasion, changing a channel access type and executing the channel access procedure using the changed channel access type before a next candidate feedback occasion.

23. The method according to claim 18, further comprising: configuring or predefining a channel access type of each candidate feedback occasion;
wherein configuring or predefining the channel access type of each candidate feedback occasion comprises at least one of:
configuring or predefining a channel access type of a candidate feedback occasion as type 1, and configuring or predefining a CAPC corresponding to type 1;
configuring or predefining a channel access type of a candidate feedback occasion as type 2A;
configuring or predefining a channel access type of a candidate feedback occasion as type 2B; or
configuring or predefining a channel access type of a candidate feedback occasion as type 2C.

24. A sidelink, SL, communication method, comprising:
receiving second feedback information; and
executing an operation of an SL transmission according to the second feedback information.

25. The method according to claim 24, wherein the SL transmission is a unicast transmission that enables feedback; and
executing the operation of the SL transmission according to the second feedback information comprises at least one of:
in response to the second feedback information comprising acknowledgement, ACK, information, clearing a retransmission cache in a process corresponding to the SL transmission;
in response to the second feedback information comprising negative ACK, NACK, information, triggering a process corresponding to the SL transmission to retransmit the SL transmission; or
in response to the second feedback information comprising not receiving first feedback information, triggering a process corresponding to the SL transmission to retransmit the SL transmission, or triggering a process corresponding to the SL transmission to re-request to receive the first feedback information.

26. The method according to claim 24, wherein the SL transmission is a groupcast transmission that enables feedback; and
executing the operation of the SL transmission according to the second feedback information comprises at least one of:
in response to the second feedback information comprising ACK information, clearing a retransmission cache in a process corresponding to the SL transmission;
in response to the second feedback information comprising NACK information, triggering a process corresponding to the SL transmission to retransmit the SL transmission; or
in response to the second feedback information comprising not receiving first feedback information, clearing a retransmission cache in a process corresponding to the SL transmission.

27. A sidelink, SL, communication method, comprising:
sending a group of SL transmissions, wherein each SL transmission in the group of SL transmissions corresponds to a respective candidate feedback occasion set;
receiving first feedback information at candidate feedback occasion sets corresponding to the group of SL transmissions; and
determining, according to the first feedback information, third feedback information to be reported to a network device.

28. The method according to claim 27, wherein the group of SL transmissions comprise at least one SL transmission; and
determining, according to the first feedback information, the third feedback information to be reported to the network device comprises:
determining second feedback information corresponding to each SL transmission according to first feedback information received at the respective candidate feedback occasion set corresponding to each SL transmission; and
determining the third feedback information according to the second feedback information corresponding to each SL transmission.

29. The method according to claim 28, wherein the SL transmission is a unicast transmission that enables feedback; and
determining the third feedback information according to the second feedback information corresponding to each SL transmission comprises:
in response to second feedback information corresponding to at least one SL transmission or a last SL transmission in the group of SL transmissions being acknowledgement, ACK, information, setting the third feedback information as ACK information; in response to second feedback information corresponding to at least one SL transmission and the last SL transmission in the group of SL transmissions being not ACK information, setting the third feedback information as negative ACK, NACK, information; or
setting the third feedback information to be the same as second feedback information corresponding to the last SL transmission in the group of SL transmissions.

30. The method according to claim 28, wherein the SL transmission is a first groupcast type transmission that enables feedback; and
determining the third feedback information according to the second feedback information corresponding to each SL transmission comprises:
in response to second feedback information corresponding to a last SL transmission in the group of SL transmissions being ACK information, setting the third feedback information as ACK information; in response to second feedback information corresponding to a last SL transmission in the group of SL transmissions being not ACK information, setting the third feedback information as NACK information.

31. The method according to claim 28, wherein the SL transmission is a second groupcast type transmission that enables feedback; and
determining the third feedback information according to the second feedback information corresponding to each SL transmission comprises:
in response to second feedback information corresponding to at least one SL transmission or a last SL transmission in the group of SL transmissions being ACK information, setting the third feedback information as ACK information; in response to second feedback information corresponding to at least one SL transmission and the last SL transmission in the group of SL transmissions being not ACK information, setting the third feedback information as NACK information.

32. The method according to claim 28, wherein the SL transmission is a third groupcast type transmission that enables feedback; and determining the third feedback information according to the second feedback information corresponding to each SL transmission comprises:
in response to second feedback information corresponding to a last SL transmission in the group of SL transmissions being ACK information, setting the third feedback information as ACK information; in response to second feedback information corresponding to a last SL transmission in the group of SL transmissions being not ACK information, setting the third feedback information as NACK information.

33. A communication node, comprising a memory, a processor and a computer program stored in the memory and executable by the processor, wherein the processor, when executing the program, performs the sidelink, SL, communication method according to any one of claims 1 to 32.

34. A computer-readable storage medium for storing a computer program which, when executed by a processor, causes the processor to perform the sidelink, SL, communication method according to any one of claims 1 to 32.
